# FASCICULE DE BREVET EUROPEEN

(11) **EP 0 983 728 B1**
(45) Date de publication et mention de la délivrance du brevet: **09.07.2003**
(21) Numéro de dépôt: 99402011.3
(22) Date de dépôt: 06.08.1999
(51) Int. Cl.: A23L 3/358, A23L 3/3589, A23B 4/24, A23B 4/26, A23B 7/158, A23B 7/157

(54) **Procédé et installation de lavage de produits alimentaires à l'eau ozonée**
Verfahren und Vorrichtung zum Waschen von Lebensmittel mit ozoniertem Wasser
Method and apparatus for washing food products with ozonised water

(30) Priorité: 03.09.1998 FR 9811039
(43) Date de publication de la demande: 08.03.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Crisinel, Pascal, 78280 Guyancourt (FR); Prost, Lucie, 75006 Paris (FR)
(74) Mandataire: Mellul-Bendelac, Sylvie Lisette

(56) Documents cités:
- CA-A- 2 102 362
- US-A- 4 849 237
- US-A- 5 667 829
- PATENT ABSTRACTS OF JAPAN vol. 014, no. 390 (C-0751), 23 août 1990 (1990-08-23) & JP 02 145178 A (SANYO DENSHI KOGYO KK), 4 juin 1990 (1990-06-04)
- PATENT ABSTRACTS OF JAPAN vol. 014, no. 492 (C-0773), 26 octobre 1990 (1990-10-26) & JP 02 203739 A (TOYO EREMENTO KOGYO KK), 13 août 1990 (1990-08-13)

## Description

La présente invention concerne un procédé et une installation de traitement de produits alimentaires à l'ozone, visant notamment à obtenir selon les cas un blanchiment, une désinfection, ou encore une désodorisation des produits ainsi traités.

On sait que la littérature concernant le traitement à l'ozone de produits alimentaires, en particulier dans le domaine du lavage des produits alimentaires à l'eau ozonée (produits de la mer tels que poissons, crustacés, mais aussi fruits et légumes...), est extrêmement abondante, on se reportera notamment aux documents FR-385815, EP-294502, FR-797928, CA-2102362 ou encore US-4559902.

Une des applications très prometteuse aujourd'hui est donc le lavage des produits alimentaires à l'eau ozonée en particulier le lavage des fruits et légumes ou encore des produits de la mer.

Aujourd'hui le chlore sous ses différentes formes, est le principal auxiliaire de désinfection autorisé en Europe. Les deux principales formes du chlore utilisables dans une telle application sont le chlore gazeux qui nécessite un équipement très spécifique mais présente par ailleurs l'avantage d'être actif à 100%, et d'autre part les hypochlorites (eau de javel) dont l'utilisation est certes plus simple mais qui exige en revanche une régulation des doses très délicate.

La littérature mentionne le plus souvent que cette régulation doit s'effectuer en particulier en fonction de la qualité et du PH de l'eau (un PH trop élevé diminuant l'efficacité de l'hypochlorite), rendant nécessaire de réguler le PH de l'eau typiquement entre 6,5 et 7. En pratique, le plus souvent, les industriels ne contrôlent que ponctuellement le PH et la teneur en chlore de leurs eaux, ce qui conduit à observer sur une même ligne de lavage des teneurs en chlore pouvant varier dans une large gamme autour de la teneur souhaitée, et pouvant ainsi entraîner des non-conformités en terme de qualité microbiologique des produits finaux.

Les inconvénients de l'utilisation du chlore dans le lavage des produits alimentaires sont bien connus, ils sont notamment liés aux facteurs suivants :
- les possibilités de recyclage des eaux sont limitées : en effet, un recyclage poussé entraîne la formation de chloramines (chloramines qui sont soupçonnés d'avoir des effets cancérigènes et de créer des irritations oculaires et respiratoires) , rendant préférable d'enlever le chlore résiduel par passage sur un charbon actif ;
- le chlore est par ailleurs un élément très stable qui persiste longtemps dans les eaux de rejet ;
- enfin, pour les sites utilisateurs qui mettent en oeuvre du chlore élémentaire, celui-ci est transporté sous forme liquide jusqu'au site industriel ce qui pose de lourds problèmes de sécurité et de stockage.

On comprend alors dans ce contexte pourquoi tant les industriels que les administrations de chaque pays sont à la recherche de solutions alternatives au chlore pour le lavage des produits alimentaires, et que parmi les alternatives disponibles, l'ozone représente une solution attractive.

En effet:
- le lavage à l'eau ozonée ne nécessite pas de rinçage ultérieur des produits (il n'y a pas d'effets rémanent de l'ozone) ;
- le résiduel d'ozone qui pourrait persister dans l'eau après lavage réagira en fait très vite avec les matières organiques des eaux de collecte, le site industriel ne rejettera alors aucun résidus, contrairement au cas du chlore ;
- l'ozone est produit sur site, n'entraînant aucun inconvénient du point de vue du transport ou du stockage;
- il a été montré que l'eau ozonée est efficace dans une gamme de PH plus large (typiquement entre 6 et 8) ;
- pour une installation munie d'un capotage et d'une extraction adéquate des bacs de lavage, la teneur en ozone gazeux dans l'atelier utilisateur est inférieure à la valeur moyenne d'exposition (0,1ppm) supprimant ainsi les problèmes d'irritation dus habituellement au chlore et chloramines ;
- l'utilisation de l'ozone permet de recycler au moins une partie des eaux de lavages.

Les travaux menés à bien par la Demanderesse dans ce domaine ont mis en évidence l'importance de maintenir une concentration d'ozone dissous dans l'eau du bac de lavage stable pour obtenir une telle désinfection (par exemple un point de consigne qui se situe entre 1 et 3 ppm en fonction des produits traités et du temps de passage).

Il faut également considérer le souci qu'a le plus souvent l'industriel de recycler une partie de son eau de lavage, notamment pour le lavage de certains produits tels que les salades.

Différentes solutions ont été proposées dans la littérature pour obtenir une telle régulation de la teneur en ozone dans l'eau de lavage de produits alimentaires, une première solution consistant à agir sur la puissance de l'ozoneur.

Certes cette solution peut être envisageable lorsque l'on équipe une seule ligne de lavage, en revanche, si on équipe plusieurs lignes, cette solution nécessite un ozoneur et un système de transfert gaz/liquide par ligne.

Une autre solution envisagée par la littérature consiste à réguler un débit de gaz ozoné (un seul ozoneur et un système de régulation de débit de gaz injecté dans l'eau alimentant un bac de lavage donné). Ici encore la méthode proposée n'est pas optimale, sachant d'une part qu'il faut alors mettre en place un débitmètre numérique par ligne, c'est à dire par bac de lavage, mais que surtout le transfert gaz/liquide risque de ne pas être optimisé dans la mesure où ces systèmes de transfert (mélangeur statique ou encore tour de contact) sont dimensionnés pour un débit d'eau et de gaz donnés.

Ces solutions de régulation traditionnelle sont par exemple décrites dans le document CA-2102362 au nom de African Oxygen qui décrit une régulation de la teneur en ozone dans l'eau de traitement des produits par mesure de la teneur effective dans l'eau, comparaison avec un point de consigne, et rétroaction le cas échéant selon le résultat de la comparaison sur les moyens de dissolution de l'ozone en amont.

Il faut encore noter que l'efficacité de ces méthodes se révèle insuffisante s'il y a une brusque demande en ozone (par exemple, cas des crudités émincées dont la surface d'échange est considérablement augmentée), et qu'elles n'intègrent pas non plus la question du recyclage de l'eau puisqu'il faudrait dans ce cas sur-dimensionner chaque ozoneur pour non seulement abattre la demande en ozone due à la charge organique de l'eau que l'on recycle, mais aussi apporter la quantité d'ozone nécessaire à la désinfection des produits alimentaires.

La présente invention vise à apporter une solution technique aux problèmes ci-dessus exposés, en permettant notamment de fonctionner avec un seul équipement d'ozonation quelque soit le nombre de lignes de lavage en service, et que le procédé puisse répondre ponctuellement à de brusques et fortes demandes d'ozone, tout en laissant la possibilité de recycler au moins une partie des eaux de lavage.

Les travaux menés à bien par la Demanderesse ont montré qu'il était possible d'apporter une réponse technique à cette combinaison de problèmes, par la production d'un débit d'eau sur-ozonée c'est à dire en pratique supérieure ou égale à la plus élevée des consignes de teneur en ozone dissous associées aux bacs de lavage de l'installation, et de réguler la teneur en ozone dissous dans chacun des bacs par rapport à chaque consigne considérée en régulant le débit d'eau sur-ozonée transporté par chaque ligne d'alimentation des bacs.

L'installation selon l'invention, de traitement de produits alimentaires, comportant une mise en contact du produit avec de l'ozone, au niveau d'une solution initiale qui comporte, outre le produit, de l'eau ozonée, comprend alors :
a) au moins deux réserves de solution initiale, chaque réserve pouvant être associée à une valeur de consigne de la teneur en ozone dissous qu'il est souhaitable de maintenir dans la solution initiale considérée ;
b) une source d'un mélange gazeux de traitement qui comporte de l'ozone ;
c) une source primaire d'eau ;
d) des moyens d'ozonation d'un flux d'eau en provenance de ladite source primaire d'eau à l'aide du mélange gazeux de traitement, aptes à produire en leur sortie, un flux d'eau ozonée ;
e) des moyens d'injection du flux d'eau ozonée dans chacune des dites réserves de solution initiale ;
et se caractérise par la mise en oeuvre combinée des mesures suivantes :
- les moyens d'injections comprennent au moins deux organes de réglage de débit, permettant de régler chaque débit d'eau ozonée injectée dans chacune des dites réserves de solution initiale ;
- la teneur en ozone dissous dudit flux d'eau ozonée est supérieure ou égale à la plus élevée des dites consignes de teneur en ozone associées à chacune des dites réserves de solution initiale ;
- l'installation comprend des moyens d'analyse de la teneur en ozone dissous dans chacune desdites réserves de solution initiale, ainsi que des moyens d'acquisition et de traitement de données aptes à recevoir le résultat d'analyse de la teneur en ozone dissous dans chacune des réserves de solution initiale et à comparer avec la consigne de teneur en ozone associée à chacune des réserves, pour rétroagir, le cas échéant, selon le résultat de chaque comparaison, sur l'organe de réglage du débit d'eau ozonée alimentant la réserve de solution initiale considérée, afin de rétablir la teneur en ozone dissous au niveau de la consigne souhaitée.

L'installation selon l'invention peut par ailleurs comporter une ou plusieurs des caractéristiques suivantes :
- elle comporte une capacité tampon, alimentée en eau ozonée en provenance des dits moyens d'ozonation, et de laquelle partent au moins deux lignes de transport aptes à alimenter en eau ozonée chacune des dites au moins deux réserves de solution initiale, chaque ligne de transport étant munie en aval de la capacité tampon d'un des dits organes de réglage de débit ;
- au niveau d'au moins une des réserves de solution initiale, elle comporte une ligne secondaire d'alimentation de la réserve en eau d'appoint, chaque ligne secondaire pouvant alimenter indépendamment la réserve considérée, ou encore être reliée en sa partie aval à la ligne d'alimentation/transport de la réserve de solution initiale considérée en eau ozonée, en aval de l'organe de réglage associé ;
- elle comporte, au niveau d'au moins une des dites réserves de solution initiale, des moyens de recirculation d'eau de la réserve considérée, vers l'une ou l'autre des destinations suivantes :
   i) vers cette même réserve considérée,
   ii) vers une autre des dites au moins deux réserves de solutions initiales,
   iii) vers un point d'une ligne reliant ladite source primaire d'eau aux moyens d'ozonation ;
- dans le cas iii) de recirculation vers un point d'une ligne reliant la source primaire d'eau aux moyens d'ozonation, l'installation comprend des moyens de filtration et le cas échéant d'ozonation, aptes à traiter l'eau recyclée en provenance de ladite réserve de solution initiale avant son arrivée au dit point de la ligne reliant la source primaire d'eau aux moyens d'ozonation ;
- les dits moyens d'ozonation comportent une capacité tampon d'ozonation, alimentée en eau en provenance de la dite source primaire d'eau, et de laquelle partent au moins deux lignes de transport aptes à alimenter en eau ozonée chacune des dites au moins deux réserves de solution initiale, chaque ligne de transport étant munie en aval de la capacité tampon d'ozonation, d'un des dits organes de réglage de débit, la capacité tampon d'ozonation étant apte à être alimentée en ozone selon l'une ou l'autre des configurations suivantes :
   i) la capacité tampon d'ozonation comporte en son espace intérieur un diffuseur poreux, apte à être alimenté en gaz de traitement en provenance de ladite source de gaz de traitement ;
   j) la capacité tampon d'ozonation est munie d'une boucle fermée de recirculation de l'eau qui y est stockée vers elle même, la boucle étant munie d'un système de dissolution d'ozone dans l'eau qui est recirculée dans la boucle, système de dissolution apte à être alimenté en gaz de traitement en provenance de ladite source de gaz de traitement ;
- au niveau d'au moins une des dites réserves de solution initiale, l'installation comprend des moyens d'injection dans la solution initiale considérée d'un gaz d'appoint comportant de l'ozone.

L'invention concerne également un procédé de traitement de produits alimentaires, comportant une mise en contact du produit avec de l'ozone, au niveau d'une solution initiale qui comporte, outre le produit, de l'eau ozonée, selon lequel :
a) on dispose d'au moins deux réserves de solution initiale, chaque réserve de solution initiale étant associée à une valeur de consigne de la teneur en ozone dissous qu'il est souhaitable de maintenir dans la solution initiale considérée ;
b) on dispose d'une source d'un mélange gazeux de traitement qui comporte de l'ozone ;
c) on dispose d'une source primaire d'eau ;
d) on dispose de moyens d'ozonation d'un flux d'eau en provenance de ladite source primaire d'eau, aptes à produire en leur sortie un flux d'eau ozonée ;
d) on injecte une quantité d'eau ozonée dans chacune des dites réserves de solution initiale ;
et se caractérisant par la mise en oeuvre combinée des mesures suivantes :
- on réalise une ozonation dudit flux d'eau en provenance de la source primaire d'eau de façon à obtenir une teneur en ozone dissous du flux d'eau ozonée qui soit supérieure ou égale à la plus élevée des consignes de teneur en ozone dissous associées aux dites réserves de solution initiale ;
- on contrôle le débit d'eau ozonée injectée dans chacune des dites réserves de solution initiale ;
- on analyse la teneur en ozone dissous dans chacune des réserves de solution initiale et l'on compare le résultat de chacune des analyses avec la valeur de consigne associée, pour rétroagir le cas échéant, selon le résultat de chaque comparaison, sur le contrôle du débit d'eau ozonée injectée dans la réserve de solution initiale considérée, afin de rétablir la teneur en ozone dissous de la réserve de solution initiale considérée au niveau de sa valeur de consigne associée.

Comme il apparaîtra clairement à l'homme du métier, les produits alimentaires visés par la présente invention, pourront être extrêmement variés, comprenant à titre illustratif les chairs animales tels que les pulpes de poissons, les filets de poisson ou poissons entiers, mais également d'autres produits de la mer, tels que mollusques ou crustacés, ou encore d'autres produits alimentaires tels que les fruits et légumes.

On comprendra également que le « traitement » à l'ozone selon l'invention vise selon le produit alimentaire considéré, mais également selon le cahier des charges recherché par chaque site utilisateur particulier, à réaliser l'une ou plusieurs des actions parmi les actions suivantes : un blanchiment, une désinfection, ou encore une désodorisation du produit.

De même la « solution initiale » selon l'invention doit s'entendre comme un mélange solide/liquide homogène on non. On comprendra par ailleurs que selon l'application considérée, la solution initiale qui comprend donc le produit alimentaire et l'eau, peut comprendre en outre des additifs tels que des bases ou des acides dont le rôle peut être non seulement désinfectant mais également d'ajuster le PH du milieu, ou encore des anti-oxygène tels que l'acide ascorbique, la liste donnée ci-dessus n'étant absolument pas exhaustive et représentative de tous les additifs couramment pratiqués par l'industrie alimentaire.

On sait par ailleurs que les installations de lavage de produits alimentaires comportent traditionnellement plusieurs bacs de lavage, l'eau d'au moins un de ces bacs étant par exemple chlorée. Selon la présente invention, chaque bac ou réserve de solution initiale pourra donc être le seul bac de lavage d'une ligne ou bien pourra être précédé ou suivi sur la ligne d'un ou plusieurs bacs de prélavage à l'eau, éventuellement additivée, chaque situation dépendra on le conçoit du type de produit et de l'état initial de propreté des produits.

Comme il apparaîtra clairement à l'homme du métier, on choisira également selon le type et la présentation des produits traités dans chaque bac de solution, le degré de « surozonation » produit par les moyens d'ozonation par rapport aux consignes à maintenir dans les solutions , notamment pour prendre en compte la nécessité de répondre ponctuellement à de brusques et fortes demandes d'ozone.

Le procédé selon l'invention pourra par ailleurs adopter l'une ou plusieurs des caractéristiques suivantes :
- en sortie des moyens d'ozonation, on dirige le flux d'eau ozonée vers une capacité tampon de laquelle partent au moins deux lignes de transport destinées à alimenter en eau ozonée chacune des dites au moins deux réserves de solution initiale, chaque ligne de transport étant munie, en aval de la capacité tampon, d'un organe de réglage de débit destiné à réaliser ledit contrôle de débit d'eau ozonée alimentant chacune des réserves de solutions initiales ;
- au niveau d'au moins une des dites réserves de solution initiale, on adjoint, directement à l'eau de la réserve considérée, ou au flux d'eau ozonée alimentant la réserve de solution initiale considérée en provenance des moyens d'ozonation, un flux secondaire d'eau d'appoint ;
- au niveau d'au moins une des dites réserves de solution initiale, on effectue une recirculation d'eau de la réserve considérée vers l'une ou l'autre des destinations suivantes :
   i) vers cette même réserve de solution initiale considérée ;
   ii) vers une autre des dites au moins deux réserves de solution initiale ;
   iii) vers le flux d'eau parvenant aux moyens d'ozonation en provenance de la source primaire d'eau.
- dans le cas iii), l'eau recyclée en provenance de ladite au moins une des dites réserves de solution initiale, avant son injection dans le flux d'eau parvenant aux moyens d'ozonation, subit une étape de filtration et le cas échéant d'ozonation ;
- on réalise l'ozonation dudit flux d'eau en provenance de la source primaire d'eau, de façon à obtenir ledit flux d'eau ozonée, de la façon suivante :
   i) on dispose d'une capacité tampon d'ozonation, alimentée en eau en provenance de la dite source primaire d'eau, et de laquelle partent au moins deux lignes de transport aptes à alimenter en eau ozonée chacune des dites au moins deux réserves de solution initiale, chaque ligne de transport étant munie en aval de la capacité tampon d'ozonation , d'un organe de réglage de débit apte à réaliser le dit contrôle de débit ;
   j) la capacité tampon d'ozonation comporte en son espace intérieur un diffuseur poreux, apte à être alimenté en gaz de traitement en provenance de ladite source de gaz de traitement.
- on réalise l'ozonation dudit flux d'eau en provenance de la source primaire d'eau, de façon à obtenir ledit flux d'eau ozonée, de la façon suivante :
   i) on dispose d'une capacité tampon d'ozonation, alimentée en eau en provenance de la dite source primaire d'eau, et de laquelle partent au moins deux lignes de transport aptes à alimenter en eau ozonée chacune des dites au moins deux réserves de solution initiale, chaque ligne de transport étant munie en aval de la capacité tampon d'ozonation , d'un organe de réglage de débit apte à réaliser le dit contrôle de débit ;
   j) la capacité tampon d'ozonation est munie d'une boucle fermée de recirculation de l'eau qui y est stockée vers elle même, et on dissout de l'ozone dans l'eau qui est recirculée dans la boucle, en y injectant du gaz de traitement en provenance de ladite source de gaz de traitement.
- au niveau d'au moins une des dites réserves de solution initiale, on injecte dans l'eau de la réserve considérée un flux de gaz d'appoint comportant de l'ozone.

D'autres caractéristiques et avantages de la présente invention ressortiront de la description suivante donnée uniquement à titre illustratif et fait en référence aux dessins annexés sur lesquels :
- La figure 1 est une représentation schématique d'une installation de lavage de produits alimentaires à l'eau ozonée mettant en oeuvre une régulation basée sur la puissance de l'ozoneur ;
- La figure 2 est une représentation schématique d'une installation de lavage à l'eau ozonée de produits alimentaires conforme à l'invention ;
- La figure 3 est une vue partielle d'une installation conforme à l'invention où une capacité tampon est partie intégrante des moyens d'ozonation ;
- La figure 4 est une représentation schématique partielle d'un mode de réalisation d'une installation selon l'invention mettant en oeuvre une injection secondaire de gaz ozoné au niveau d'un des bacs de lavage ;
- La figure 5 est une représentation schématique d'une installation de lavage de produits alimentaires à l'eau ozonée conforme à l'invention, mettant en oeuvre au niveau d'un des bacs de lavage une régulation de l'eau du bac vers un point de la ligne reliant la source primaire d'eau aux moyens d'ozonation.

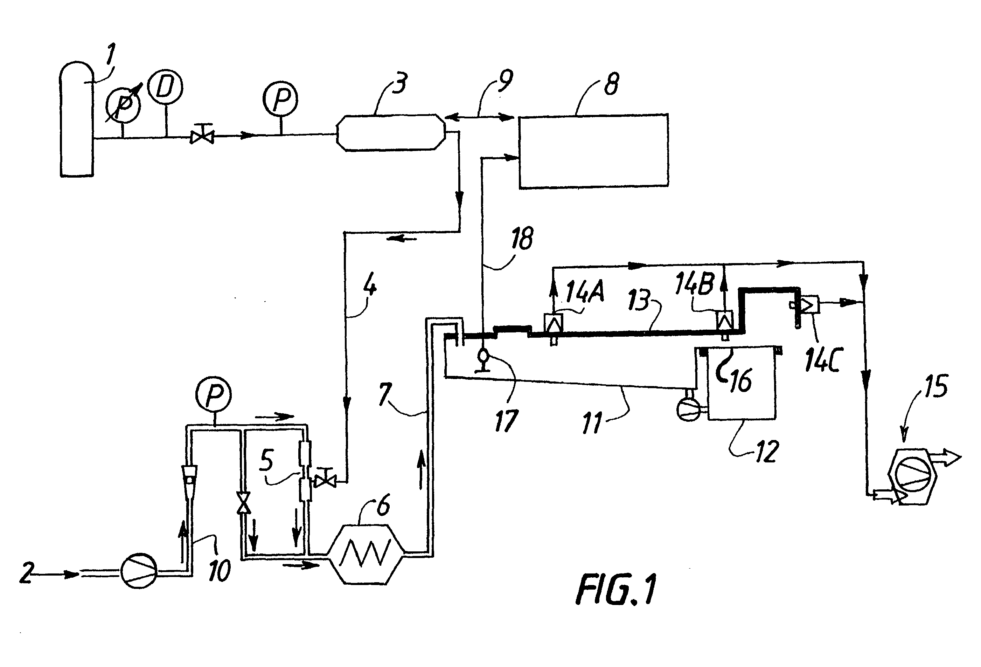

On reconnaît sur la figure 1 la présence d'un bac 11 de lavage de légumes à l'eau ozonée, suivi d'un bac 12 de recyclage d'eau, ce bac 12 étant surmonté d'une grille 16 au dessus de laquelle peuvent circuler et s'égoutter les produits en provenance du bac 11 de lavage.

L'eau de lavage étant ozonée, l'ensemble constitué du bac de lavage 11 et du bac de recyclage d'eau 12, est surmonté d'une structure de capotage 13 représentée ici en trait épais, de laquelle sont solidaires des systèmes d'aspiration 14a, 14b et 14c, renvoyant l'atmosphère aspirée vers un système 15 d'extraction et d'épuration d'ozone.

Pour alimenter le bac 11 en eau ozonée, on dispose donc sur cette installation d'un ozoneur 3, alimenté en air ou encore en un mélange gazeux initial comportant de l'oxygène en provenance d'une source gazeuse 1, le mélange comportant de l'oxygène et de l'ozone produit par l'ozoneur 3 étant alors dirigé via la ligne de gaz 4 vers un système d'ozonation d'eau.

En effet, en provenance d'une source primaire d'eau 2, de l'eau est dirigée via la ligne 10 jusqu'à un système venturi 5, au sein duquel est injecté le mélange gazeux ozoné circulant dans la ligne 4 (système de transfert gaz/liquide basé sur un effet venturi bien connu du domaine de l'ozonation).

L'eau ainsi ozonée dans le venturi 5 parvient ensuite à un contacteur 6 (par exemple un mélangeur statique, ou encore une tour de contact) avant de rejoindre via la ligne 7, le bac de lavage 11. L'installation de lavage selon l'état de la technique de la figure 1, fonctionne alors en régulation de la façon suivante : une analyse 17 de la teneur en ozone dissous de l'eau du bac de lavage 11 est effectuée et envoyée (flèche 18 sur la figure) vers un automate programmable 8, apte à comparer le résultat de la mesure ainsi effectuée avec la consigne de teneur en ozone dissous qu'il est souhaitable d'établir dans le bac 11, et de rétroagir, le cas échéant, selon le résultat de cette comparaison, sur la puissance de l'ozoneur (flèche 9 sur la figure) pour augmenter ou diminuer la teneur en ozone du mélange gazeux dirigé via la ligne 4 vers le flux d'eau en provenance de la source 2.

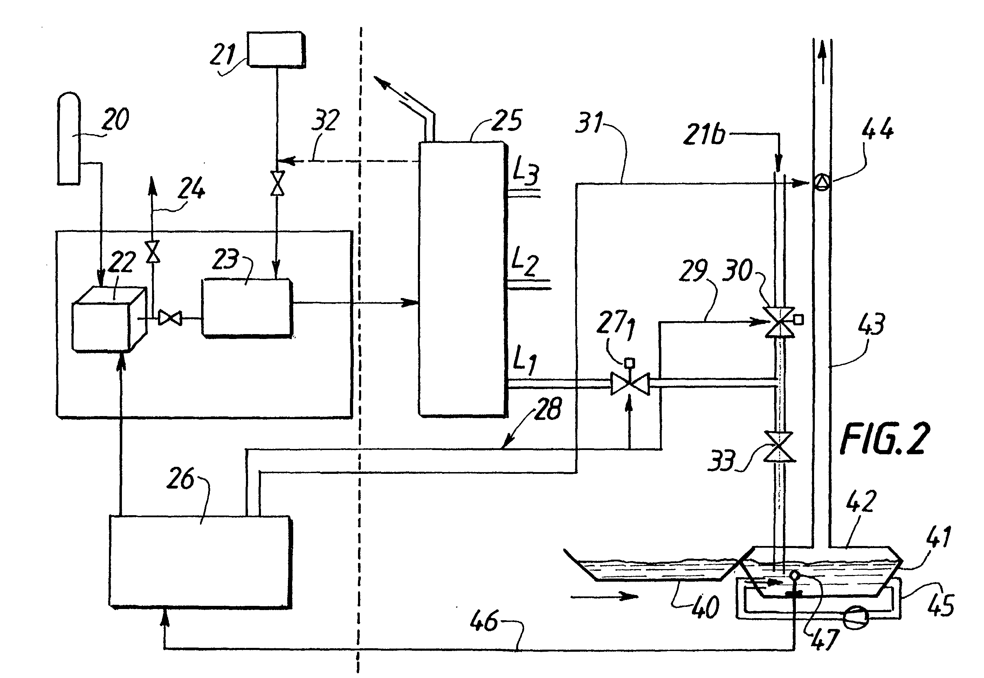

La figure 2 représente pour sa part une installation de lavage à l'eau ozonée de produits alimentaires conforme à l'invention.

On y reconnaît la présence d'un premier bac de lavage 40 à l'eau simple, éventuellement additivée par exemple d'un acide adéquat, suivi par un bac 41 de lavage à l'eau ozonée alimenté en eau ozonée au travers de la vanne 33.

Comme habituellement, ce bac étant alimenté en eau ozonée, il est surmonté d'une structure de capotage 42, solidaire d'un système d'évacuation 43, 44.

Un gaz comportant de l'oxygène (air, oxygène etc...) en provenance d'une source 20 est dirigé vers un ozoneur 22, qui produit en sa sortie un mélange gazeux comportant de l'oxygène et de l'ozone (dont on peut le cas échéant analyser la teneur en ozone via la prise d'analyse 24), le mélange gazeux comportant de l'ozone ainsi produit étant ensuite dirigé vers des moyens d'ozonation 23 non détaillés mais bien connus de l'homme de métier (effet venturi, mélangeur statique, tour de contact...), où ce mélange gazeux de traitement comportant de l'ozone vient à la rencontre d'un flux d'eau en provenance d'une source primaire d'eau 21.

Le flux d'eau ozonée ainsi formé est alors dirigé vers une capacité tampon 25, de laquelle partent au moins deux lignes de transport (L1, L2, L3...), apte chacune à alimenter en eau ozonée en provenance de la capacité tampon 25 une réserve ou bac de lavage, la figure 2 pour des raisons de facilité de lecture, ne représentant qu'un bac de lavage 41 en bout de ligne L1.

La ligne L1 transporte l'eau ozonée en provenance de la capacité tampon 25 vers le bac de lavage 41 au travers d'un organe de réglage de débit 27₁ (associé à la ligne L1) et d'une vanne 33.

S'ajoute le cas échéant au débit d'eau ozonée circulant dans la ligne L1, avant que celui-ci n'atteigne le bac 41, un débit d'eau d'appoint non ozonée 21b, s'adjoignant au débit d'eau ozonée au travers d'un organe de régulation de débit 30.

Comme déjà signalé, on aura pu également mettre en oeuvre une arrivée dans le bac 41 d'un débit d'eau d'appoint non ozonée indépendante et séparée de la ligne L1/27₁/33.

On a symbolisé par la flèche tiretée 32 sur la figure la possibilité de renvoyer un trop plein d'eau de la capacité tampon 25 vers la ligne d'alimentation des moyens d'ozonation 23 en eau en provenance de la source 21, ou encore le renvoi d'eau de la capacité tampon vers cette même ligne d'alimentation des moyens d'ozonation, en vue de sa « re-ozonation », du fait d'un temps d'attente trop important de l'eau dans la capacité (relaxation de l'ozone).

Comme il apparaîtra clairement à l'homme du métier, l'organe de régulation du débit circulant dans la ligne L1 peut être de nature extrêmement variée, qu'il soit à fonctionnement automatique ou manuel, incluant des électrovannes, des vannes de réglage, des pompes séquentielles ou doseuses, ou encore des groupements de plusieurs vannes tout ou rien disposées en parallèle.

L'installation de la figure 2 est alors régulée grâce à la présence d'un système 26 d'acquisition et de traitement de données tel qu'un automate programmable, qui reçoit, en provenance du bac 41 une information sur la teneur en ozone dissout de l'eau de ce bac 41 (prélèvement 47 et flèche 46 sur la figure), effectue une comparaison entre cette valeur de teneur mesurée et la consigne de teneur en ozone dissous associée à ce bac 41, pour le cas échéant, en fonction de cette comparaison, rétroagir via la ligne d'action 28 sur l'organe de réglage de débit 27₁ associé au bac 41, ainsi que le cas échéant sur l'organe 30 d'admission d'un débit d'appoint d'eau dans le flux principal d'eau ozonée (ligne d'action 29).

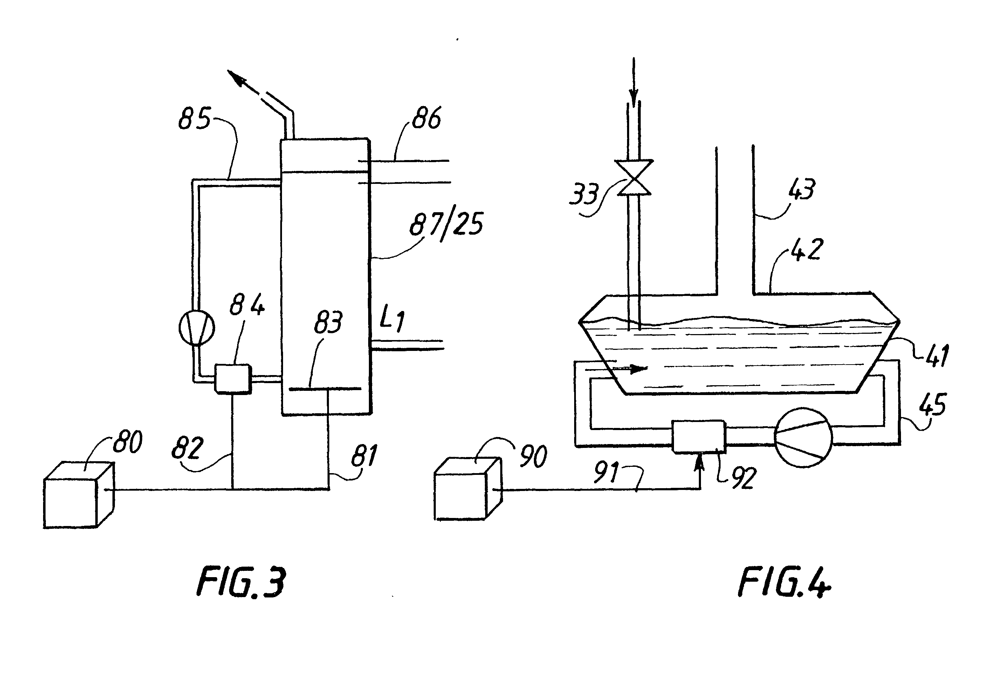

La figure 3 illustre deux modes de réalisation de l'invention où la capacité tampon 25 (ici numérotée 87) fait partie intégrante des moyens d'ozonation puisque un diffuseur poreux 83 situé au sein de l'espace interne à la capacité tampon, est relié à l'aide d'une ligne 81 à une source 80 de gaz de traitement comportant de l'ozone, permettant de diffuser l'ozone dans l'eau de la capacité par un poreux présent en fond de cuve, la capacité tampon 25/87 jouant alors un rôle additionnel de contacteur/dégazeur.

Selon l'autre mode représenté figure 3, la capacité tampon est munie d'une boucle (85) fermée de recirculation de l'eau qui y est stockée vers elle même, et l'on dissout (84) alors de l'ozone dans l'eau qui est recirculée dans la boucle, en y injectant du gaz de traitement en provenance de la source (80) de gaz de traitement.

On note par ailleurs que la capacité tampon est ici munie d'un contrôle de niveau d'eau 86.

La figure 4 illustre pour sa part un mode de réalisation avantageux de l'invention s'adaptant tout particulièrement au cas où il est nécessaire d'abattre une forte demande de fond en ozone (ce qui peut être le cas de certaines crudités se présentant sous forme émincée), l'installation comportant alors au niveau d'au moins une des réserves de solution, une injection d'appoint en gaz ozoné que l'on maintiendra avantageusement constant tandis que le système de régulation déjà décrit plus haut assure la régulation autour du point de consigne du bac 41.

L'injection du gaz ozoné d'appoint se fait ici au niveau d'une boucle de recirculation 45 dédiée au bac 41, le gaz ozoné en provenance d'une source 90 étant dirigé le long d'une ligne 91, pour aboutir sur un système d'ozonation 92 de l'eau circulant dans la boucle de recirculation 45 (le système 92 n'étant pas détaillé ici mais comprenant comme habituellement par exemple un injecteur et un pot dégazeur).

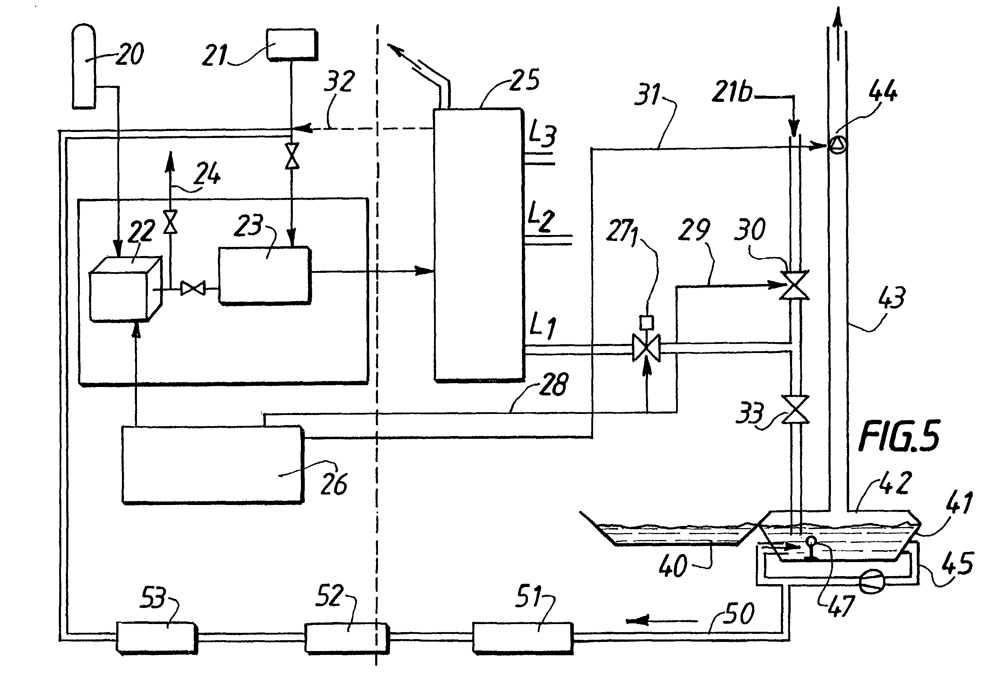

L'installation de la figure 5 conforme également à l'invention, diffère assez peu de l'installation précédemment décrite dans le cadre de la figure 2, mais comporte, au niveau d'un des bacs de l'installation (en l'occurrence ici le bac 41), des moyens de recirculation d'une partie de l'eau du bac, le long de la ligne 50, pour recycler cette eau en provenance du bac vers un point situé sur la ligne allant de la source primaire d'eau 21 aux moyens d'ozonation 23.

Sur son trajet, l'eau ainsi recyclée est retraitée, par exemple comme c'est le cas ici en passant sur un système de filtration 51, sur un système d'ozonation/désinfection 52, suivis d'un système collecteur/dégazeur (piscine) 53, avant réinjection.

On conçoit alors à la lecture de tout ce qui précède que le procédé et dispositif selon l'invention permet d'alimenter en eau ozonée à partir d'un seul équipement d'ozonation plusieurs lignes de lavage en service, en régulant la teneur en ozone dissous au niveau de chaque bac de lavage de façon simple et économique, sans qu'à aucun moment les conditions de transfert gaz/liquide n'aient à être modifiées en amont, ceci tout en étant capable de répondre ponctuellement à de brusques et fortes demandes d'ozone. La possibilité de recycler au moins une partie des eaux de lavage est également préservée.

## Revendications

1. Installation de traitement de produits alimentaires, comportant une mise en contact du produit avec de l'ozone, au niveau d'une solution initiale qui comporte, outre le produit, de l'eau ozonée, l'installation comprenant :
a) au moins deux réserves (41..) de solution initiale, chaque réserve pouvant être associée à une valeur de consigne de la teneur en ozone dissous qu'il est souhaitable de maintenir dans la solution initiale considérée ;
b) une source (22, 80) d'un mélange gazeux de traitement qui comporte de l'ozone ;
c) une source (21) primaire d'eau ;
d) des moyens (23) d'ozonation d'un flux d'eau en provenance de ladite source primaire d'eau à l'aide du mélange gazeux de traitement, aptes à produire en leur sortie, un flux d'eau ozonée ;
e) des moyens (25, L1, L2, L3, ..) d'injection du flux d'eau ozonée dans chacune des dites réserves de solution initiale ;
**caractérisée par** la mise en oeuvre combinée des mesures suivantes :
- les moyens d'injections comprennent au moins deux organes (27₁...) de réglage de débit, permettant le réglage de chaque débit d'eau ozonée injectée dans chacune des dites réserves de solution initiale ;
- la teneur en ozone dissous dudit flux d'eau ozonée est supérieure ou égale à la plus élevée des dites consignes de teneur en ozone associées aux dites réserves de solution initiale ;
- l'installation comprend des moyens d'analyse (46, 47) de la teneur en ozone dissous dans chacune desdites réserves de solution initiale, ainsi que des moyens d'acquisition et de traitement de données (26), aptes à recevoir le résultat d'analyse de la teneur en ozone dissous dans chacune des réserves de solution initiale et à comparer avec la consigne de teneur en ozone associée à chacune des réserves, pour rétroagir (28), le cas échéant, selon le résultat de chaque comparaison, sur l'organe (27₁..) de réglage du débit d'eau ozonée alimentant la réserve de solution initiale considérée, afin de rétablir la teneur en ozone dissous au niveau de la consigne souhaitée.

2. Installation selon la revendication 1 **caractérisée en ce qu'**elle comporte une capacité tampon (25), apte à être alimentée en eau ozonée en provenance des dits moyens d'ozonation, et de laquelle partent au moins deux lignes (L1, L2...) de transport aptes à alimenter en eau ozonée chacune des dites au moins deux réserves (41,...) de solution initiale, chaque ligne de transport étant munie en aval de la capacité tampon, d'un des dits organes (27₁...) de réglage de débit.

3. Installation selon une des revendications 1 ou 2, **caractérisée en ce que** au niveau d'au moins une des réserves de solution initiale, elle comporte une ligne secondaire d'alimentation de la réserve considérée en eau d'appoint (21b), chaque ligne secondaire pouvant alimenter indépendamment la réserve considérée, ou encore être reliée en sa partie aval à la ligne d'alimentation/transport de la réserve de solution initiale considérée en eau ozonée, en aval de l'organe de réglage associé .

4. Installation selon une des revendications 1 à 3, **caractérisée en ce qu'**elle comporte, au niveau d'au moins une des dites réserves de solution initiale, des moyens (45, 50) de recirculation d'eau de la réserve considérée, vers l'une ou l'autre des destinations suivantes :
i) vers cette même réserve considérée,
ii) vers une autre des dites au moins deux réserves de solutions initiales,
iii) vers un point d'une ligne reliant ladite source (21) primaire d'eau aux moyens (23) d'ozonation.

5. Installation selon la revendication 4, **caractérisée en ce que** dans le cas iii) de recirculation vers un point d'une ligne reliant la source primaire d'eau aux moyens d'ozonation, l'installation comprend des moyens de filtration (51), et le cas échéant d'ozonation (52), aptes à traiter l'eau recyclée en provenance de ladite réserve de solution initiale avant son arrivée au dit point de la ligne reliant la source primaire d'eau aux moyens d'ozonation.

6. Installation selon la revendication 1, **caractérisée en ce que** les dits moyens d'ozonation comportent une capacité tampon d'ozonation (87), alimentée en eau en provenance de la dite source primaire d'eau, et de laquelle partent au moins deux lignes (L1, L2...) de transport aptes à alimenter en eau ozonée chacune des dites au moins deux réserves (41,...) de solution initiale, chaque ligne de transport étant munie en aval de la capacité tampon, d'un des dits organes (27₁...) de réglage de débit, la capacité tampon d'ozonation (87) étant apte à être alimentée en ozone selon l'une ou l'autre des configurations suivantes :
- la capacité tampon d'ozonation comporte en son espace intérieur un diffuseur (83) poreux, apte à être alimenté (81) en gaz de traitement en provenance de ladite source (80) de gaz de traitement ;
- la capacité tampon d'ozonation est munie d'une boucle (85) fermée de recirculation de l'eau qui y est stockée vers elle même, la boucle étant munie d'un système (84) de dissolution d'ozone dans l'eau qui est recirculée dans la boucle, système de dissolution apte à être alimenté (82) en gaz de traitement en provenance de ladite source (80) de gaz de traitement.

7. Installation selon la revendication 2 ou selon l'une des revendications 3 à 5 dans leur dépendance à la revendication 2, **caractérisée en ce que** les dits moyens d'ozonation comportent ladite capacité tampon (25), qui est apte à être alimentée en eau en provenance de la dite source primaire d'eau, et en ozone selon l'une ou l'autre des configurations suivantes :
- la capacité tampon (25) comporte en son espace intérieur un diffuseur (83) poreux, apte à être alimenté (81) en gaz de traitement en provenance de ladite source (80) de gaz de traitement ;
- la capacité tampon (25) est munie d'une boucle (85) fermée de recirculation de l'eau qui y est stockée vers elle même, la boucle étant munie d'un système (84) de dissolution d'ozone dans l'eau qui est recirculée dans la boucle, système de dissolution apte à être alimenté (82) en gaz de traitement en provenance de ladite source (80) de gaz de traitement.

8. Installation selon l'une des revendications précédentes, **caractérisé en ce que** au niveau d'au moins une des dites réserves de solution initiale, l'installation comprend des moyens (91, 92) d'injection d'un gaz d'appoint comportant de l'ozone dans la solution initiale considérée.

9. Procédé de traitement de produit alimentaire, comportant une mise en contact du produit avec de l'ozone, au niveau d'une solution initiale qui comporte, outre le produit, de l'eau ozonée, selon lequel :
a) on dispose d'au moins deux réserves de solution initiale, chaque réserve de solution initiale étant associée à une valeur de consigne de la teneur en ozone dissous qu'il est souhaitable de maintenir dans la solution initiale considérée ;
b) on dispose d'une source d'un mélange gazeux de traitement qui comporte de l'ozone ;
c) on dispose d'une source primaire d'eau ;
d) on dispose de moyens d'ozonation d'un flux d'eau en provenance de ladite source primaire d'eau, aptes à produire en leur sortie un flux d'eau ozonée ;
d) on injecte une quantité du flux d'eau ozonée dans chacune des dites réserves de solution initiale ;
**caractérisé par** la mise en oeuvre combinée des mesures suivantes :
- on réalise une ozonation dudit flux d'eau en provenance de la source primaire d'eau de façon à obtenir une teneur en ozone dissous du flux d'eau ozonée supérieure ou égale à la plus élevée des consignes de teneur en ozone dissous associées aux dites réserves de solution initiale ;
- on contrôle le débit d'eau ozonée injectée dans chacune des dites réserves de solution initiale ;
- on analyse la teneur en ozone dissous dans chacune des réserves de solution initiale et l'on compare le résultat de ces analyses avec la valeur de consigne associée à chaque réserve, pour rétroagir le cas échéant, selon le résultat de chaque comparaison, sur le contrôle du débit d'eau ozonée injectée dans la réserve de solution initiale considérée, afin de rétablir la teneur en ozone dissous de la réserve de solution initiale considérée au niveau de sa valeur de consigne associée.

10. Procédé selon la revendication 9, **caractérisé en ce que** en sortie des moyens d'ozonation, on dirige le flux d'eau ozonée vers une capacité tampon, de laquelle partent au moins deux lignes de transport destinées à alimenter en eau ozonée chacune des dites au moins deux réserves de solution initiale, chaque ligne de transport étant munie, en aval de la capacité tampon, d'un organe de réglage de débit destiné à réaliser ledit contrôle de débit d'eau ozonée alimentant chacune des réserves de solutions initiales.

11. Procédé selon la revendication 9 ou 10, **caractérisé en ce que** au niveau d'au moins une des dites réserves de solution initiale, on adjoint, directement à l'eau de la réserve considérée, ou au flux d'eau ozonée alimentant la réserve de solution initiale considérée en provenance des moyens d'ozonation, un flux secondaire d'eau d'appoint .

12. Procédé selon l'une des revendications 9 à 11, **caractérisé en ce que** au niveau d'au moins une des dites réserves de solution initiale, on effectue une recirculation d'eau de la réserve considérée vers l'une ou l'autre des destinations suivantes :
i) vers cette même réserve de solution initiale considérée ;
ii) vers une autre des dites au moins deux réserves de solution initiale ;
iii) vers le flux d'eau parvenant aux moyens d'ozonation en provenance de la source primaire d'eau.

13. Procédé selon la revendication 12 **caractérisé en ce que** dans le cas iii), l'eau recyclée en provenance de ladite au moins une des dites réserves de solution initiale, avant son injection dans le flux d'eau parvenant aux moyens d'ozonation, subit une étape de filtration et le cas échéant d'ozonation.

14. Procédé selon la revendication 9, **caractérisé en ce que** l'on réalise l'ozonation dudit flux d'eau en provenance de la source primaire d'eau, de façon à obtenir ledit flux d'eau ozonée, de la façon suivante :
- on dispose d'une capacité tampon d'ozonation (87), alimentée en eau en provenance de la dite source primaire d'eau, et de laquelle partent au moins deux lignes (L1, L2...) de transport aptes à alimenter en eau ozonée chacune des dites au moins deux réserves (41,...) de solution initiale, chaque ligne de transport étant munie en aval de la capacité tampon d'ozonation d'un organe (27₁...) de réglage de débit apte à réaliser le dit contrôle de débit ;
- la capacité tampon d'ozonation comporte en son espace intérieur un diffuseur (83) poreux, apte à être alimenté (81) en gaz de traitement en provenance de ladite source (80) de gaz de traitement.

15. Procédé selon la revendication 9, **caractérisé en ce que** l'on réalise l'ozonation dudit flux d'eau en provenance de la source primaire d'eau, de façon à obtenir ledit flux d'eau ozonée, de la façon suivante :
- on dispose d'une capacité tampon d'ozonation (87), alimentée en eau en provenance de la dite source primaire d'eau, et de laquelle partent au moins deux lignes (L1, L2...) de transport aptes à alimenter en eau ozonée chacune des dites au moins deux réserves (41,...) de solution initiale, chaque ligne de transport étant munie en aval de la capacité tampon d'ozonation , d'un organe (27₁...) de réglage de débit apte à réaliser le dit contrôle de débit ;
- la capacité tampon d'ozonation est munie d'une boucle (85) fermée de recirculation de l'eau qui y est stockée vers elle même, et **en ce que** l'on dissout (84) de l'ozone dans l'eau qui est recirculée dans la boucle, en y injectant du gaz de traitement en provenance de ladite source (80) de gaz de traitement.

16. Procédé selon l'une des revendications 9 à 15, **caractérisé en ce que** au niveau d'au moins une des dites réserves de solution initiale, on injecte dans l'eau de la réserve considérée un flux de gaz d'appoint comportant de l'ozone.

## Patentansprüche

1. Vorrichtung zur Behandlung von Lebensmitteln, umfassend eine Kontaktnahme des Produktes mit Ozon im Bereich einer Stammlösung, die außer dem Produkt ozonisiertes Wasser umfasst, wobei die Vorrichtung umfasst:
a) mindestens zwei Stammlösungsreserven (41...), wobei jeder Reserve ein Sollwert des Gehalts an gelöstem Ozon, der in der betreffenden Stammlösung beibehalten werden soll, zugeordnet werden kann;
b) eine Quelle (22, 80) eines Gasbehandlungsgemisches, das Ozon umfasst;
c) eine Primärwasserquelle (21);
d) Mittel (23) zum Ozonisieren eines Wasserflusses, der von der Primärwasserquelle stammt, mit Hilfe des Gasbehandlungsgemisches, die an ihrem Ausgang einen ozonisierten Wasserfluss erzeugen können;
e) Mittel (25, L1, L2, L3,...) zum Einspritzen des ozonisierten Wasserflusses in jede der Stammlösungsreserven;
**gekennzeichnet durch** den kombinierten Einsatz der folgenden Maßnahmen:
- die Einspritzmittel umfassen mindestens zwei Elemente (27₁,...) zur Durchflussregelung, die die Regelung jedes Durchflusses von ozonisiertem Wasser, das in jede der Stammlösungsreserven eingespritzt wird, ermöglicht;
- der Gehalt des ozonisierten Wasserflusses an gelöstem Ozon ist größer oder gleich dem höchsten der Ozongehaltsollwerte, die den Stammlösungsreserven zugeordnet sind;
- die Vorrichtung umfasst Mittel (46, 47) zur Analyse des Gehalts an gelöstem Ozon in jeder der Stammlösungsreserven sowie Mittel zur Erfassung und Bearbeitung von Daten (26), die das Ergebnis der Analyse des Gehalts an gelöstem Ozon in jeder der Stammlösungsreserven empfangen und mit dem Ozongehaltsollwert, der jeder der Reserven zugeordnet ist, vergleichen können, um gegebenenfalls je nach dem Ergebnis des Vergleichs rückwirkend auf das Element (27₁,...) zur Regelung des Durchflusses an ozonisiertem Wasser, mit dem die betreffende Stammlösungsreserve beschickt wird, einzuwirken (28), um den Gehalt an gelöstem Ozon wieder auf den gewünschten Sollwert zu bringen.

2. Vorrichtung nach Anspruch 1, **dadurch gekennzeichnet, dass** sie eine Pufferkapazität (25) umfasst, die mit ozonisiertem Wasser von den Mitteln zum Ozonisieren beschickt werden kann und von der mindestens zwei Förderleitungen (L1, L2,...) weggehen, die jede der mindestens zwei Stammlösungsreserven (41,...) mit ozonisiertem Wasser beschicken können, wobei jede Förderleitung im Nachlaufbereich der Pufferkapazität mit einem der Elemente (27₁,...) zur Durchflussregelung ausgestattet ist.

3. Vorrichtung nach einem der Ansprüche 1 oder 2, **dadurch gekennzeichnet, dass** sie im Bereich von mindestens einer der Stammlösungsreserven eine zweite Leitung zur Beschickung der betreffenden Reserve mit Frischwasser (21b) umfasst, wobei jede zweite Leitung unabhängig die betreffende Reserve beschicken kann oder auch an ihrem nachlaufseitigen Teil mit der Leitung zur Beschickung/Förderung der betreffenden Stammlösungsreserve mit ozonisiertem Wasser im Nachlaufbereich des zugehörigen Regelelements verbunden sein kann.

4. Vorrichtung nach einem der Ansprüche 1 bis 3, **dadurch gekennzeichnet, dass** sie im Bereich von mindestens einer der Stammlösungsreserven Mittel (45, 50) für die Wasserrückführung von der betreffenden Reserve zu dem einen oder anderen der folgenden Bestimmungsorte umfasst:
i) zu dieser selben betreffenden Reserve,
ii) zu einer anderen der mindestens zwei Stammlösungsreserven,
iii) zu einem Punkt einer Leitung, die die Primärwasserquelle (21) mit den Mitteln (23) zum Ozonisieren verbindet.

5. Vorrichtung nach Anspruch 4, **dadurch gekennzeichnet, dass** im Falle von iii) der Rückführung zu einem Punkt einer Leitung, die die Primärwasserquelle mit den Mitteln zum Ozonisieren verbindet, die Vorrichtung Mittel (51) zum Filtrieren und gegebenenfalls Ozonisieren (52) umfasst, die das rezyklierte Wasser, das von der Stammlösungsreserve kommt, vor seiner Ankunft an dem Punkt der Leitung, die die Primärwasserquelle mit den Mitteln zum Ozonisieren verbindet, behandeln können.

6. Vorrichtung nach Anspruch 1, **dadurch gekennzeichnet, dass** die Mittel zum Ozonisieren eine Pufferkapazität (87) zum Ozonisieren umfassen, die mit Wasser von der Primärwasserquelle beschickt wird, und von der mindestens zwei Förderleitungen (L1, L2...) weggehen, die jede der mindestens zwei Stammlösungsreserven (41,...) mit ozonisiertem Wasser beschicken können, wobei jede Förderleitung im Nachlaufbereich der Pufferkapazität mit einem der Elemente (27₁,...) zur Durchflussregelung ausgestattet ist, wobei die Pufferkapazität (87) zum Ozonisieren nach der einen oder anderen der folgenden Ausführungen mit Ozon beschickt werden kann:
- die Pufferkapazität zum Ozonisieren umfasst in ihrem Innenraum einen porösen Diffusor (83), der mit Behandlungsgas (81) von der Behandlungsgasquelle (80) beschickt werden kann;
- die Pufferkapazität zum Ozonisieren ist mit einer geschlossenen Schleife (85) für die Rezirkulation des Wassers, das in ihr gespeichert ist, zu ihr selbst versehen, wobei die Schleife mit einem System (84) zur Auflösung von Ozon in Wasser, das in der Schleife rezirkuliert wird, versehen ist, wobei das Auflösungssystem mit Behandlungsgas von der Behandlungsgasquelle (80) beschickt (82) werden kann.

7. Vorrichtung nach Anspruch 2 oder einem der Ansprüche 3 bis 5 in Abhängigkeit von Anspruch 2, **dadurch gekennzeichnet, dass** die Mittel zum Ozonisieren die Pufferkapazität (25) umfassen, die mit Wasser von der Primärwasserquelle und mit Ozon nach der einen oder anderen der folgenden Ausführungen beschickt werden kann:
- die Pufferkapazität (25) umfasst in ihrem Innenraum einen porösen Diffusor (83), der mit Behandlungsgas (81) von der Behandlungsgasquelle (80) beschickt werden kann;
- die Pufferkapazität (25) ist mit einer geschlossenen Schleife (85) für die Rezirkulation des Wassers, das in ihr gespeichert ist, zu ihr selbst versehen, wobei die Schleife mit einem System (84) zur Auflösung von Ozon in Wasser, das in der Schleife rezirkuliert wird, versehen ist, wobei das Auflösungssystem mit Behandlungsgas von der Behandlungsgasquelle (80) beschickt (82) werden kann.

8. Vorrichtung nach einem der vorhergehenden Ansprüche, **dadurch gekennzeichnet, dass** im Bereich von mindestens einer der Stammlösungsreserven die Vorrichtung Mittel (91, 92) zum Einspritzen eines Zusatzgases, das Ozon umfasst, in die betreffende Stammlösung besitzt.

9. Verfahren zur Behandlung von Lebensmitteln, umfassend eine Kontaktnahme des Produktes mit Ozon im Bereich einer Stammlösung, die außer dem Produkt ozonisiertes Wasser umfasst, wobei:
a) mindestens zwei Stammlösungsreserven vorhanden sind, wobei jede Stammlösungsreserve einem Sollwert für den Gehalt an gelöstem Ozon, der in der betreffenden Stammlösung beibehalten werden soll, zugeordnet ist;
b) eine Quelle eines Gasbehandlungsgemisches, das Ozon umfasst, vorhanden ist;
c) eine Primärwasserquelle vorhanden ist;
d) Mittel zum Ozonisieren eines Wasserflusses, der von der Primärwasserquelle kommt, vorhanden sind, die an ihrem Ausgang einen ozonisierten Wasserfluss erzeugen können;
e) eine Menge eines ozonisierten Wasserflusses in jede der Stammlösungsreserven eingespritzt wird;
**gekennzeichnet durch** den kombinierten Einsatz der folgenden Maßnahmen:
- Durchführung eines Ozonisierens des Wasserflusses, der von der Primärwasserquelle kommt, um einen Gehalt des ozonisierten Wasserflusses an gelöstem Ozon von größer oder gleich dem höchsten der Sollwerte für den Gehalt an gelöstem Ozon, der den Stammlösungsreserven zugeordnet ist, zu erhalten;
- Kontrolle des Durchsatzes an ozonisiertem Wasser, das in jede der Stammlösungsreserven eingespritzt wird;
- Analyse des Gehalts an gelöstem Ozon in jeder der Stammlösungsreserven und Vergleich des Ergebnisses dieser Analysen mit dem jeder Reserve zugeordneten Sollwert, um gegebenenfalls rückwirkend je nach dem Ergebnis jedes Vergleichs auf die Kontrolle des Durchsatzes an ozonisiertem Wasser, das in die betreffende Stammlösungsreserve eingespritzt wird, einzuwirken, um den Gehalt der betreffenden Stammlösungsreserve an gelöstem Ozon wieder auf Höhe ihres zugeordneten Sollwertes zu bringen.

10. Verfahren nach Anspruch 9, **dadurch gekennzeichnet, dass** am Ausgang der Mittel zum Ozonisieren der ozonisierte Wasserfluss zu einer Pufferkapazität geleitet wird, von der mindestens zwei Förderleitungen weggehen, die dazu bestimmt sind, jede der mindestens zwei Stammlösungsreserven mit ozonisiertem Wasser zu beschicken, wobei jede Förderleitung im Nachlaufbereich der Pufferkapazität mit einem Element zur Durchflussregelung versehen ist, das dazu bestimmt ist, die Kontrolle des Durchsatzes an ozonisiertem Wasser, mit dem jede der Stammlösungsreserven beschickt wird, durchzuführen.

11. Verfahren nach Anspruch 9 oder 10, **dadurch gekennzeichnet, dass** im Bereich von mindestens einer der Stammlösungsreserven direkt dem Wasser der betreffenden Reserve oder dem ozonisierten Wasserfluss, mit dem die betreffende Stammlösungsreserve von den Mitteln zum Ozonisieren beschickt wird, ein sekundärer Frischwasserfluss zugesetzt wird.

12. Verfahren nach einem der Ansprüche 9 bis 11, **dadurch gekennzeichnet, dass** im Bereich von mindestens einer der Stammlösungsreserven eine Wasserrezirkulation von der betreffenden Reserve zu dem einen oder anderen der folgenden Bestimmungsorte erfolgt:
i) zu dieser selben betreffenden Stammlösungsreserve,
ii) zu einer anderen der mindestens zwei Stammlösungsreserven,
iii) zu dem Wasserfluss, der zu den Mitteln zum Ozonisieren von der Primärwasserquelle gelangt.

13. Verfahren nach Anspruch 12, **dadurch gekennzeichnet, dass** im Fall iii) das rezyklierte Wasser von mindestens einer der Stammlösungsreserven vor seiner Einspritzung in den Wasserfluss, der zu den Mitteln zum Ozonisieren gelangt, einem Schritt des Filtrierens und gegebenenfalls des Ozonisierens unterzogen wird.

14. Verfahren nach Anspruch 9, **dadurch gekennzeichnet, dass** das Ozonisieren des von der Primärwasserquelle kommenden Wasserflusses, um den ozonisierten Wasserfluss zu erhalten, folgendermaßen durchgeführt wird:
- Vorhandensein einer Pufferkapazität (87) zum Ozonisieren, die mit Wasser von der Primärwasserquelle beschickt wird, und von der mindestens zwei Förderleitungen (L1, L2...) weggehen, die jede der mindestens zwei Stammlösungsreserven (41,...) mit ozonisiertem Wasser beschicken können, wobei jede Förderleitung im Nachlaufbereich der Pufferkapazität zum Ozonisieren mit einem Element (27₁,...) zur Durchflussregelung ausgestattet ist, das die Durchflusskontrolle durchführen kann;
- die Pufferkapazität zum Ozonisieren umfasst in ihrem Innenraum einen porösen Diffusor (83), der mit Behandlungsgas von der Behandlungsgasquelle (80) beschickt (81) werden kann.

15. Verfahren nach Anspruch 9, **dadurch gekennzeichnet, dass** das Ozonisieren des Wasserflusses, der von der Primärwasserquelle kommt, um den ozonisierten Wasserfluss zu erhalten, folgendermaßen durchgeführt wird:
- Vorhandensein einer Pufferkapazität (87) zum Ozonisieren, die mit Wasser von der Primärwasserquelle beschickt wird, und von der mindestens zwei Förderleitungen (L1, L2...) weggehen, die jede der mindestens zwei Stammlösungsreserven (41,...) mit ozonisiertem Wasser beschicken können, wobei jede Förderleitung im Nachlaufbereich der Pufferkapazität zum Ozonisieren mit einem Element (27₁,...) zur Durchflussregelung ausgestattet ist, das die Durchflusskontrolle durchführen kann;
- die Pufferkapazität zum Ozonisieren ist mit einer geschlossenen Schleife (85) zur Rezirkulation des Wassers, das in ihr gespeichert ist, zu ihr selbst versehen, und Ozon wird in dem Wasser, das in der Schleife rezirkuliert wird, gelöst (84), indem in sie Behandlungsgas von der Behandlungsgasquelle (80) eingespritzt wird.

16. Verfahren nach einem der Ansprüche 9 bis 15, **dadurch gekennzeichnet, dass** im Bereich von mindestens einer der Stammlösungsreserven in das Wasser der betreffenden Reserve ein Zusatzgasfluss, der Ozon umfasst, eingespritzt wird.

## Claims

1. Plant for treating food products, which includes bringing the product into contact with ozone, within an initial solution which contains, apart from the product, ozonated water, the plant comprising:
a) at least two containers (41..) of initial solution, each container possibly being associated with a set value of the dissolved-ozone content that it is desirable to maintain in the initial solution in question;
b) a source (22, 80) of a treatment gas mixture which contains ozone;
c) a primary source (21) of water;
d) means (23) for ozonating a stream of water coming from the said primary source of water using the treatment gas mixture, which means are capable of producing, as their output, a stream of ozonated water;
e) means (25, L1, L2, L3, ..) for injecting the stream of ozonated water into each of the said initial solution containers;
**characterized by** the combined implementation of the following measures:
- the injection means comprise at least two flow-control devices (27₁...), for controlling each flow of ozonated water injected into each of the said initial solution containers;
- the dissolved-ozone content of the said stream of ozonated water is greater than or equal to the highest of the said set values of ozone content associated with the said initial solution containers;
- the plant comprises means (46, 47) for analysing the dissolved-ozone content in each of the said initial solution containers and data acquisition and processing means (26) capable of receiving the result of the analysis of the dissolved-ozone content in each of the initial solution containers and of comparing with the set value of ozone content associated with each of the containers, for feed back (28), as required, depending on the result of each comparison, to the device (27₁..) for controlling the flow of ozonated water feeding the initial solution container in question, so as to re-establish the dissolved-ozone content at the desired set value.

2. Plant according to Claim 1, **characterized in that** it comprises a buffer tank (25) which is capable of being fed with ozonated water coming from the said ozonating means, and from which at least two transport lines (L1, L2...) capable of feeding each of the said at least two initial solution containers (41,...) with ozonated water leave, each transport line being provided downstream of the buffer tank with one of the said flow-control devices (27₁...).

3. Plant according to either of Claims 1 and 2, **characterized in that** it comprises, at least at one of the initial solution containers, a secondary line for feeding the container in question with make-up water (21b), each secondary line being capable of feeding the container in question independently or else being connected in its downstream part to the feed/transport line from the initial ozonated-water solution container in question, downstream of the associated control device.

4. Plant according to one of Claims 1 to 3, **characterized in that** it comprises, at least at one of the said initial solution containers, means (45, 50) for recirculating water from the container in question towards one or other of the following destinations:
i) towards the same container in question,
ii) towards another of the said at least two initial solution containers;
iii) towards a point on a line connecting the said primary source (21) of water to the ozonating means (23).

5. Plant according to Claim 4, **characterized in that** in case iii) of recirculation towards a point on a line connecting the primary source of water to the ozonating means, the plant comprises filtration means (51) and, as required, ozonating means (52), capable of treating the recycled water coming from the said initial solution container before its arrival at the said point on the line connecting the primary source of water to the ozonating means.

6. Plant according to Claim 1, **characterized in that** the said ozonating means include an ozonating buffer tank (87), which is fed with water coming from the said primary source of water, and from which at least two transport lines (L1, L2...) capable of feeding each of the said at least two initial solution containers (41,...) with ozonated water leave, each transport line being provided downstream of the buffer tank with one of the said flow-control devices (27₁...), the ozonating buffer tank (87) being capable of being fed with ozone according to one or other of the following configurations:
- the ozonating buffer tank includes in its internal space a porous diffuser (83) capable of being fed (81) with treatment gas coming from the said source (80) of treatment gas;
- the ozonating buffer tank is provided with a closed loop (85) for recirculating the water stored in it back into itself, the loop being provided with a system (84) for dissolving ozone in the water which is recirculated in the loop, which dissolving system is capable of being fed (82) with treatment gas coming from the said source (80) of treatment gas.

7. Plant according to Claim 2 or according to one of Claims 3 to 5 in so far as they depend on Claim 2, **characterized in that** the said ozonating means include the said buffer tank (25) which is capable of being fed with water coming from the said primary source of water, and with ozone according to one or other of the following configurations:
- the buffer tank (25) includes in its internal space a porous diffuser (83) capable of being fed (81) with treatment gas coming from the said source (80) of treatment gas;
- the buffer tank (25) is provided with a closed loop (85) for recirculating the water stored in it back into itself, the loop being provided with a system (84) for dissolving ozone in the water which is recirculated in the loop, which dissolving system is capable of being fed (82) with treatment gas coming from the said source (80) of treatment gas.

8. Plant according to any one of the preceding claims, **characterized in that** at least at one of the said initial solution containers, the plant comprises means (91, 92) for injecting a make-up gas containing ozone into the initial solution in question.

9. Method of treating a food product, comprising bringing the product into contact with ozone within an initial solution which contains, apart from the product, ozonated water, in which:
a) at least two initial solution containers are provided, each initial solution container being associated with a set value of the dissolved-ozone content that it is desirable to maintain in the initial solution in question;
b) a source of a treatment gas mixture which contains ozone is provided;
c) a primary source of water is provided;
d) means for ozonating a stream of water coming from the said primary source of water are provided, which means are capable of producing, as their output, a stream of ozonated water;
d) a quantity of the stream of ozonated water is injected into each of the said initial solution containers;
**characterized by** the combined implementation of the following measures:
- the said stream of water coming from the primary source of water is ozonated so as to obtain a dissolved-ozone content of the stream of ozonated water that is greater than or equal to the highest of the set values of dissolved-ozone content associated with the said initial solution containers;
- the flow of ozonated water injected into each of the said initial solution containers is controlled;
- the dissolved-ozone content in each of the initial solution containers is analysed and the result of these analyses is compared with the set value associated with each container for feedback, as required, depending on the results of each comparison, to the control for the flow of ozonated water injected into the initial solution container in question, so as to re-establish the dissolved-ozone content of the initial solution container in question at its associated set value.

10. Method according to Claim 9, **characterized in that** at the output of the ozonating means, the stream of ozonated water is directed towards a buffer tank from which at least two transport lines intended for feeding each of the said at least two initial solution containers with ozonated water leave, each transport line being provided downstream of the buffer tank with a flow-control device intended to carry out the said control of the flow of ozonated water feeding each of the initial solution containers.

11. Method according to Claim 9 or 10, **characterized in that** at least at one of the said initial solution containers, a secondary stream of make-up water is added directly to the water in the container in question, or into the stream of ozonated water feeding the initial solution container in question coming from the ozonating means.

12. Method according to one of Claims 9 to 11, **characterized in that** at least at one of the said initial solution containers, water from the container in question is recirculated towards one or other of the following destinations:
i) towards the same initial solution container in question;
ii) towards another of the said at least two initial solution containers;
iii) towards the stream of water reaching the ozonating means and coming from the primary source of water.

13. Method according to Claim 12, **characterized in that**, in case iii), the recycled water coming from the said at least one of the said initial solution containers before it is injected into the stream of water reaching the ozonating means is subjected to a step of filtration and, if required, of ozonation.

14. Method according to Claim 9, **characterized in that** the said stream of water coming from the primary source of water is ozonated, so as to obtain the said stream of ozonated water, in the following manner:
- an ozonating buffer tank (87), which is fed with water coming from the said primary source of water and from which at least two transport lines (L1, L2...) capable of feeding each of the said at least two initial solution containers (41,...) with ozonated water leave, is provided, each transport line being provided downstream of the ozonating buffer tank with a flow-control device (27₁...) capable of carrying out the said flow control;
- the ozonating buffer tank includes in its internal space a porous diffuser (83) capable of being fed (81) with treatment gas coming from the said source (80) of treatment gas.

15. Method according to Claim 9, **characterized in that** the said stream of water coming from the primary source of water is ozonated, so as to obtain the said stream of ozonated water, in the following manner:
- an ozonating buffer tank (87), which is fed with water coming from the said primary source of water and from which at least two transport lines (L1, L2...) capable of feeding each of said at least two initial solution containers (41,...) with ozonated water leave, is provided, each transport line being provided downstream of the ozonating buffer tank with a flow-control device (27₁...) capable of carrying out the said flow control;
- the ozonating buffer tank is provided with a closed loop (85) for recirculating the water stored in it back into itself, and **in that** ozone is dissolved (84) in the water which is recirculated in the loop, by injecting into it treatment gas coming from the said source (80) of treatment gas.

16. Method according to one of Claims 9 to 15, **characterized in that** at least at one of the said initial solution containers, a stream of make-up gas containing ozone is injected into the water in the container in question.
